# EUROPÄISCHE PATENTANMELDUNG

(11) **EP 3 399 144 A1**
(43) Veröffentlichungstag der Anmeldung: **07.11.2018**
(21) Anmeldenummer: 18165730.5
(22) Anmeldetag: 04.04.2018
(51) Int. Cl.: F01D 5/08, F01D 25/12

(54) **STRAHLTRIEBWERK MIT EINER KÜHLEINRICHTUNG**

(30) Priorität: 21.04.2017 DE 102017108597
(71) Anmelder: Rolls-Royce Deutschland Ltd & Co KG, 15827 Blankenfelde-Mahlow (DE)
(72) Erfinder: Motsch, Sebastian, 14974 Ludwigsfelde (DE)
(74) Vertreter: Schmidt, Martin Michael

(57) **Zusammenfassung**

Es wird ein Strahltriebwerk (1) mit einer zur Kühlung von Triebwerkskomponenten vorgesehenen, durch ein Sekundärluftsystem gebildeten Kühleinrichtung (17) und wenigstens einer im Betrieb des Strahltriebwerks (1) um eine zentrale Triebwerksachse (2) rotierenden zentralen Welle (14, 15, 24) beschrieben. Darüber hinaus ist wenigstens eine weitere Kühleinrichtung (18) vorgesehen, die
- einen ersten Fluidführungskanal (20), der zu der zentralen Triebwerksachse (2) koaxial verläuft und zur Führung von Kühlfluid in einer ersten axialen Richtung ausgebildet ist,
- einen zweiten Fluidführungskanal (21), der den ersten Fluidführungskanal (20) radial umgibt und zur Führung von Kühlfluid in einer der ersten axialen Richtung entgegengesetzten, zweiten axialen Richtung ausgebildet ist, und
- einen Umlenkbereich (32) zur Umlenkung des Kühlfluids von dem ersten Fluidführungskanal (20) in den zweiten Fluidführungskanal (21) oder von dem zweiten Fluidführungskanal (21) in den ersten Fluidführungskanal (20) in einem Endbereich (31, 38) des ersten Fluidführungskanals (20) und des zweiten Fluidführungskanals (21) umfasst.

## Beschreibung

Die Erfindung betrifft ein Strahltriebwerk mit einer zur Kühlung von Triebwerkskomponenten vorgesehenen Kühleinrichtung gemäß der im Oberbegriff des Patentanspruchs 1 näher definierten Art.

Beispielsweise aus der DE 690 18 338 T2 ist ein Strahltriebwerk bzw. Flugtriebwerk bekannt, bei dem neben einem primären Luftsystem, das eine Luftführung durch einen Kernstromkanal und/oder durch einen Nebenstromkanal umfasst, auch ein Sekundärluftsystem vorgesehen ist. Durch das Sekundärluftsystem wird dem primären Luftsystem Luft entnommen, wobei die Luft des sekundären Luftsystems insbesondere zur Kühlung von Triebwerkskomponenten und/oder zur Dichtung von Lagerkammern eingesetzt wird.

Durch das Sekundärluftsystem wird verhindert, dass insbesondere hochbelastete Triebwerkskomponenten im Betrieb des Strahltriebwerks unerwünscht heiß werden, wobei während des Betriebs im Inneren des Strahltriebwerks ein Temperaturgradient mit einem Temperaturminimum im Bereich einer zentralen Welle vorliegt. Dieses Temperaturminimum hängt bei bekannten Strahltriebwerken insbesondere von den Kühlluftmassenströmen des Sekundärluftsystems ab. Die bekannten Methoden des Hitzeschutzes von Triebwerksbauteilen hinsichtlich der Auswahl möglichst hitzebeständiger Materialien und der Kühlung unterliegen dabei natürlichen, physikalisch begründeten Grenzen. Nur durch kostenaufwändige Maßnahmen lassen sich die Grenzen dieser Einsatzbereiche erweitern.

Der vorliegenden Erfindung liegt die Aufgabe zugrunde, ein Strahltriebwerk zur Verfügung zu stellen, bei dem auf konstruktiv einfache Weise die Kühlung von Triebwerkskomponenten weiter verbessert ist.

Erfindungsgemäß wird diese Aufgabe mit einem Strahltriebwerk mit den Merkmalen des Patentanspruchs 1 gelöst.

Es wird ein Strahltriebwerk mit einer zur Kühlung von Triebwerkskomponenten vorgesehenen, durch ein Sekundärluftsystem gebildeten Kühleinrichtung und wenigstens einer im Betrieb des Flugtriebwerks um eine zentrale Triebwerksachse rotierenden zentralen Welle vorgeschlagen.

Erfindungsgemäß ist wenigstens eine weitere Kühleinrichtung vorgesehen, die einen ersten Fluidführungskanal, der zu der zentralen Triebwerksachse koaxial verläuft und zur Führung von Kühlfluid in einer ersten axialen Richtung ausgebildet ist, einen zweiten Fluidführungskanal, der den ersten Fluidführungskanal vorzugsweise radial außen oder alternativ auch innen umgibt und zur Führung von Kühlfluid in einer der ersten axialen Richtung entgegengesetzten Richtung ausgebildet ist, umfasst. Weiterhin umfasst diese weitere Kühleinrichtung einen Umlenkbereich zur Umlenkung des Kühlfluids von dem ersten Fluidführungskanal in den zweiten Fluidführungskanal oder von dem zweiten Fluidführungskanal in den ersten Fluidführungskanal in einem Endbereich des ersten Fluidführungskanals und des zweiten Fluidführungskanals.

Durch das Vorsehen der weiteren Kühleinrichtung mit der Führung von Kühlfluid in zwei entgegengesetzten Richtungen ist eine verbesserte Kühlung bzw. eine verbesserte Kühleffizienz von Triebwerkskomponenten erzielbar, die auf einfache und kostengünstige Weise umsetzbar ist. Im Betrieb des Strahltriebwerks kann durch die weitere Kühleinrichtung ein Temperaturniveau insbesondere im Bereich der zentralen Welle gegenüber herkömmlich ausgeführten Strahltriebwerken signifikant abgesenkt und eine zusätzliche thermale Senke geschaffen werden, so dass gegenüber herkömmlich ausgeführten Strahltriebwerken weniger hitzebeständige und daher kostengünstigere Materialien für Triebwerkskomponenten eingesetzt werden können und/oder ein geringeres Gewicht der jeweiligen Triebwerkskomponente erzielt werden kann.

Durch die erfindungsgemäß verbesserte Kühlung ist auch eine Erhöhung der Lebensdauer von Triebwerkskomponenten, insbesondere hinsichtlich Korrosion und Schadenstoleranz, erzielbar.

Die weitere Kühleinrichtung ist von dem Sekundärluftsystem, welches neben der Kühlung üblicherweise auch zur Dichtung und/oder Lagerlastkontrolle dient, entkoppelt ausführbar und bildet insbesondere ein von dem Sekundärluftsystem unabhängiges weiteres Luftsystem, quasi ein Tertiärluftsystem, das beim Durchströmen der wenigstens einen zentralen Welle die Druck- und Strömungsverläufe des Sekundärluftsystems nicht beeinflusst bzw. nicht kompromittiert. Dies ist auf einfache Weise dadurch erzielbar, wenn in dem ersten Fluidführungskanal und/oder dem zweiten Fluidführungskanal im Betrieb des Strahltriebwerks im Wesentlichen ein dem Umgebungsdruck entsprechender Druck vorliegt. Die weitere Kühleinrichtung ist dabei mithin einfach in bestehende Triebwerkskonzepte integrierbar.

Als Kühlfluid kommt aus Gründen der Praktikabilität bei Strahltriebwerken eines Flugzeugs in erster Linie Gas, und dabei insbesondere Luft, als Kühlfluid in Betracht. Daneben ist jedoch auch der Einsatz einer Kühlflüssigkeit denkbar.

Das erfindungsgemäß ausgeführte Strahltriebwerk kann grundsätzlich sowohl als Einwellentriebwerk oder als Mehrwellentriebwerk ausgeführt sein, das eine oder weitere zentrale Wellen vorzugsweise aus einem Material mit hoher Wärmeleitfähigkeit aufweist. Die Fluidführungskanäle sind durch Kavitäten dieser Wellen geführt, wobei die Fluidführungskanäle vorzugsweise mit einem möglichst großen Durchmesser ausgeführt sind, so dass der jeweilige Fluidführungskanal eine große Oberfläche bzw. Wandfläche aufweist.

Bei einer vorteilhaften Ausführung eines erfindungsgemäßen Strahltriebwerks sind zwei zentrale Wellen vorgesehen, von denen eine als innere Hohlwelle und die andere als koaxial zu der inneren Hohlwelle angeordnete und diese umgebende äußere Hohlwelle ausgebildet ist, wobei der erste Fluidführungskanal innerhalb der inneren Hohlwelle und der zweite Fluidführungskanal zwischen der inneren Hohlwelle und der äußeren Hohlwelle verläuft. Der erste Fluidführungskanal ist dabei lediglich durch eine Wandung der inneren zentralen Welle von dem zweiten Führungskanal getrennt.

Die zentralen Wellen können insbesondere als Welle im Niederdruckbereich, als Welle im Mitteldruckbereich und/oder als Welle im Hochdruckbereich des Strahltriebwerks ausgebildet sein, wobei die innere Hohlwelle auch als eine Luftleitröhre, eine sogenannte Air Guide Tube, ausgeführt sein kann, welche innerhalb einer Welle angeordnet ist. Es bestehen somit vielfältige Möglichkeiten der Integration der erfindungsgemäßen weiteren Kühleinrichtung in bekannte Triebwerkskonzepte.

Bei einer vorteilhaften Ausführung des Strahltriebwerks nach der Erfindung weist die äußere Hohlwelle im Umlenkbereich einen geschlossenen Endbereich auf. Eine Umlenkung von Kühlfluid von dem ersten Fluidführungskanal in den zweiten Fluidführungskanal oder umgekehrt wird hierbei auf zweckmäßige Weise geschaffen, wenn die innere Hohlwelle im Umlenkbereich in axialer Richtung des Strahltriebwerks kürzer als die äußere Hohlwelle des Strahltriebwerks ist und von dieser im Umlenkbereich umfasst wird.

Es ist ein Fluideinlass zur Zuführung von Kühlfluid in den ersten Fluidführungskanal oder in den zweiten Fluidführungskanal und ein Fluidauslass zur Abführung von Kühlfluid aus dem zweiten Fluidführungskanal oder aus dem ersten Fluidführungskanal erforderlich, wobei der Fluideinlass und der Fluidauslass vorteilhafterweise jeweils in einem in Hauptströmungsrichtung des Flugtriebwerks stromaufgewandten oder in einem stromabgewandten Endbereich der Fluidführungskanäle angeordnet sind. Beispielsweise kann den Fluidführungskanälen durch eine im Bereich eines Nasenkonus angeordnete Öffnung im Betrieb des Strahltriebwerks Umgebungsluft zuführbar sein.

Im Hinblick auf die Lage der Kavitäten der Hohlwellen und einer einfachen Zuführung von Kühlfluid ist es vorteilhaft, wenn der Fluideinlass in einem in radialer Richtung des Flugtriebwerks mittigen Bereich des Strahltriebwerks angeordnet ist.

Um eine verbesserte Kühlfluidzuführung durch den Fluideinlass in den ersten Fluidführungskanal oder in den zweiten Fluidführungskanal zu schaffen, kann eine Kühlfluidfördereinrichtung im Bereich des Fluideinlasses angeordnet sein. Die Kühlfluidfördereinrichtung kann beispielsweise als außerhalb der Fluidführungskanäle angeordneter externer Kompressor und/oder als innerhalb eines Fluidführungskanals angeordneter, beispielsweise als Mikrokompressor ausgeführter Kompressor ausgebildet sein. Dabei können in einem dem Fluideinlass zugewandten Bereich des Fluidführungskanals umlaufend Schaufeln, insbesondere sogenannte Scoops, angeordnet sein.

Neben dem Bereitstellen einer Kühlfluidfördereinrichtung kann es auch vorgesehen sein, dass dem Fluidführungskanal Kühlfluid passiv aufgrund eines im Betrieb vorliegenden Druckgefälles zugeführt wird. Weiterhin ist es auch denkbar, dass dem Fluidführungskanal Kühlfluid beispielsweise in einem als Taxi oder Take off bezeichneten Betriebszustand eines Flugzeugs aktiv mittels einer Kühlfluidfördereinrichtung und während eines Fluges passiv durch Konvektion zugeführt wird.

Zur Steigerung eines Wärmeumsatzes im Bereich der Fluidführungskanäle und zur verbesserten Abkühlung von Luftmassenströmen des Sekundärluftsystems kann wenigstens ein Fluidführungskanal an einer radial inneren Oberfläche und/oder einer radial äußeren Oberfläche zumindest bereichsweise Mittel zur Strömungsführung innerhalb des Fluidführungskanals aufweisen, die insbesondere durch eine entsprechende Konturierung des Fluidführungskanals gebildet sind. Solche Mittel können dazu ausgeführt sein, einem durch den Fluidführungskanal geführten Kühlfluidstrom einen Drall aufzuprägen, so dass ein Wärmeenergieumsatz hierdurch erhöht ist. Durch ein Zusammenwirken des durch den Fluidführungskanal geführten Kühlfluids mit Luftmassenströmen des Sekundärluftsystems kann auch eine verbesserte Abkühlung der Luftmassenströme des Sekundärluftsystems erzielt werden.

Bei einer vorteilhaften Ausführung eines erfindungsgemäßen Strahltriebwerks erstreckt sich der erste Fluidführungskanal und/oder der zweite Fluidführungskanal in axialer Richtung des Strahltriebwerks von einem Bereich stromauf eines Bläsers bis zu einem Bereich stromab einer Turbineneinrichtung, beispielsweise innerhalb eines Abgaskonus, wobei der Umlenkbereich insbesondere im Bereich des Abgaskonus vorgesehen ist.

Um eine Kühlfluidströmung im Bereich eines Kühlfluideintritts in einen Fluidführungskanal auf einfache Weise von einer Kühlfluidströmung im Bereich eines Kühlfluidaustritts aus dem anderen Fluidführungskanal zu trennen, kann im Bereich des Fluidauslasses wenigstens eine Ablenkeinrichtung zur Führung des Kühlfluids in radialer Richtung nach außen, insbesondere in Richtung eines Nebenstromkanals des Flugtriebwerks, angeordnet sein.

Sowohl die in den Patentansprüchen angegebenen Merkmale als auch die in dem nachfolgenden Ausführungsbeispiel des erfindungsgemäßen Strahltriebwerks angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Strahltriebwerks ergeben sich aus den Patentansprüchen und aus dem nachfolgend unter Bezugnahme auf die Zeichnung prinzipmäßig beschriebenen Ausführungsbeispiel.

Es zeigt:
- Fig. 1: eine vereinfachte Schnittdarstellung eines Strahltriebwerks mit einer durch ein Sekundärluftsystem gebildeten Kühleinrichtung und einer innerhalb achszentraler Hohlwellen angeordneten weiteren Kühleinrichtung;
- Fig. 2: eine stark schematisierte Darstellung eines in Fig. 1 mit einem Kreis II gekennzeichneten Bereiches;
- Fig. 3: eine stark schematisierte Darstellung eines in Fig. 1 mit einem Kreis III gekennzeichneten Bereiches; und
- Fig. 4: eine vereinfachte Vorderansicht einer in Fig. 1 und Fig. 3 ersichtlichen radialen Abstützeinrichtung.

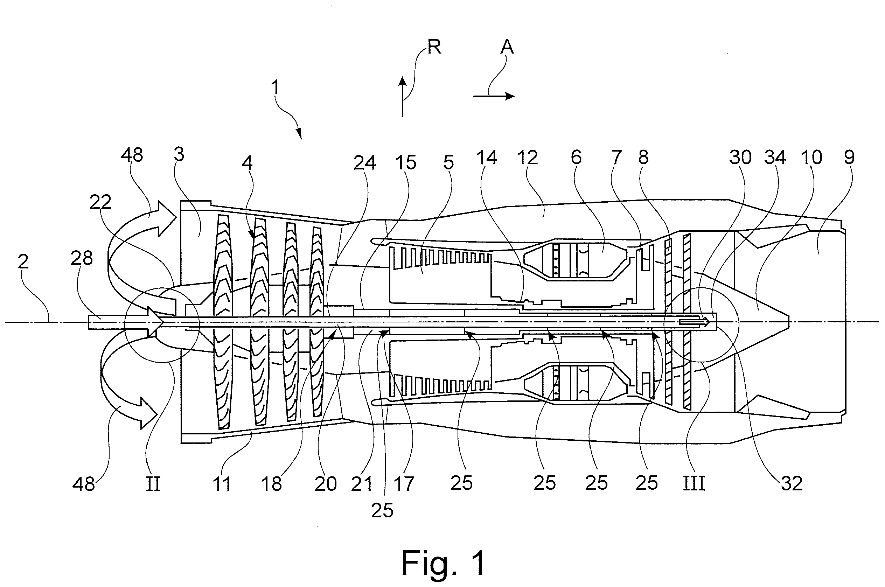

In Fig. 1 ist ein Strahltriebwerk 1 eines Flugzeugs gezeigt, das eine zentrale Hauptdrehachse 2 aufweist. Des Weiteren umfasst das Strahltriebwerk 1 in axialer Strömungsrichtung einen Lufteinlass 3, hier mehrere Bläser 4, einen Verdichter 5, eine Verbrennungseinrichtung 6, eine Hochdruckturbine 7, eine Niederdruckturbine 8 und eine Ausströmdüse 9, in deren Bereich ein Abgaskonus 10 angeordnet ist. Eine Triebwerksgondel 11 umgibt das Gasturbinentriebwerk 1 und begrenzt den Lufteinlass 3.

Das Strahltriebwerk 1 arbeitet in herkömmlicher Weise, wobei in den Lufteinlass 3 eintretende Luft durch den Bläser 4 beschleunigt wird, um zwei Luftströme zu erzeugen. Ein erster Luftstrom strömt in den Verdichter 5, der den ihm zugeführten Luftstrom komprimiert, und ein zweiter Luftstrom wird durch einen Bypasskanal 12 geführt, um einen Antriebsschub bereitzustellen.

Die aus dem Verdichter 5 ausströmende Druckluft wird in die Verbrennungseinrichtung 6 eingeleitet, wo eine Vermischung mit Kraftstoff erfolgt und das Kraftstoff-Luft-Gemisch verbrannt wird. Die entstehenden heißen Verbrennungsprodukte expandieren und treiben dabei die Hochdruckturbine 7 und die Niederdruckturbine 8 an, bevor sie über die Ausströmdüse 9 ausgeführt werden, um einen zusätzlichen Antriebsschub bereitzustellen. Die Hochdruckturbine 7 und die Niederdruckturbine 8 treiben den Verdichter 5 bzw. den Bläser 4 jeweils über eine Hochdruckwelle 14 bzw. eine Niederdruckwelle 15 an.

Zur Kühlung der Triebwerkskomponenten ist eine durch ein Sekundärluftsystem gebildete Kühleinrichtung 17 vorgesehen, welche herkömmlicher Art ist und in Fig. 1 nur symbolisch angedeutet ist. Ergänzend ist eine weitere, ein Tertiärluftsystem darstellende Kühleinrichtung 18 vorgesehen, die vorliegend von dem Sekundärluftsystem getrennt ist, so dass im Bereich der weiteren Kühleinrichtung 18 geführte Kühlluft nicht in die durch das Sekundärluftsystem gebildete Kühleinrichtung 17 übertritt oder umgekehrt und die Sekundärluft-Kühleinrichtung 17 und die Tertiärluft-Kühleinrichtung 18 getrennte Kühleinrichtungen bilden.

Die weitere Kühleinrichtung 18 weist einen ersten Fluidführungskanal 20 bzw. Luftführungskanal und einen zweiten Fluidführungskanal 21 bzw. Luftführungskanal auf, die sich jeweils in axialer Richtung A des Strahltriebwerks vorliegend von einem Bereich eines Nasenkonus 22 bis zu einem Bereich innerhalb des Abgaskonus 10 erstrecken. Die Fluidführungskanäle 20, 21, sind in den Kavitäten einer eine innere Hohlwelle bildenden zentralen Welle 24, welche eine sogenannte Air Guide Tube darstellt, und der die innere Hohlwelle umgebenden, eine äußere Hohlwelle bildenden Niederdruckwelle 15 ausgebildet.

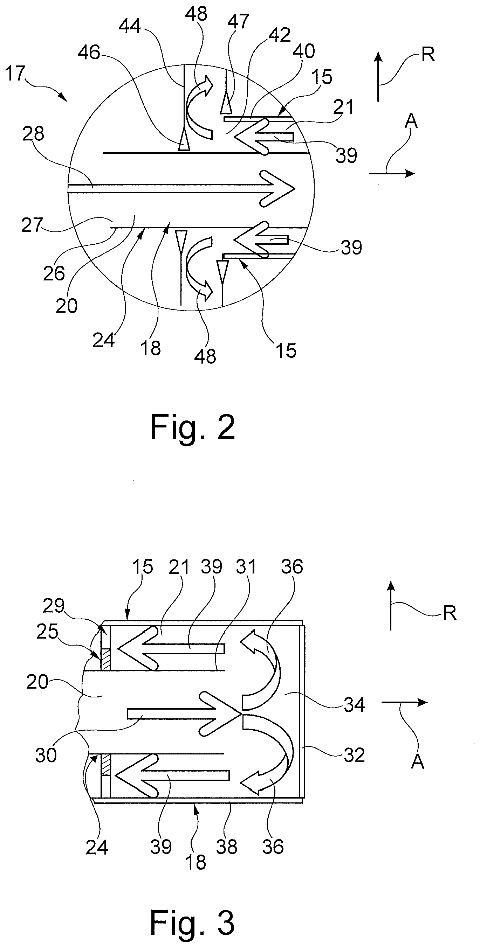

Der erste Fluidführungskanal 20 wird durch eine zentrale Bohrung der Luftleitröhre bzw. inneren Hohlwelle 24 gebildet und weist in einem bezüglich einer Hauptstromrichtung A stromaufseitigen Endbereich 26 einen in Fig. 2 näher ersichtlichen Fluid-einlass 27 bzw. Lufteinlass auf, über den dem ersten Fluidführungskanal 20 im Betrieb mit einem Pfeil 28 symbolisierte Luft aus der Umgebung zuführbar ist. Um eine entsprechende Luftzuführung zu ermöglichen, weisen stromauf des Lufteinlasses 27 angeordnete Bauteile, beispielsweise der Nasenkonus 22 in einem zentralen Bereich, eine entsprechend dimensionierte Öffnung auf.

Der zweite Fluidführungskanal 21 wird in radialer Richtung R des Strahltriebwerks 1 betrachtet außerhalb des Wandungsbereichs der inneren Hohlwelle 24 in einem verbleibendem Ringraum gegenüber einem Wandungsbereich der Niederdruckwelle bzw. äußeren Hohlwelle 15 gebildet.

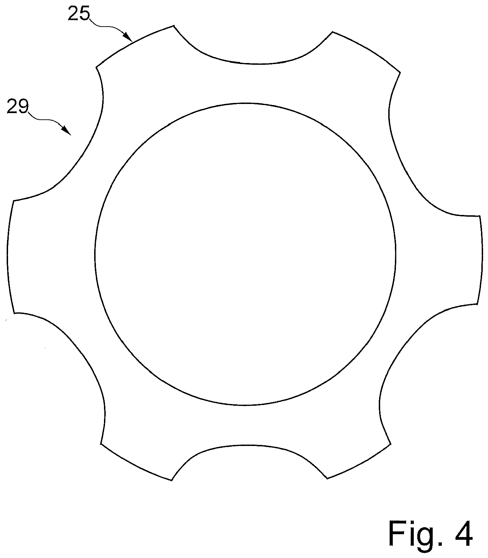

Der erste Fluidführungskanal 20 und der zweite Fluidführungskanal 21 können über ihre axiale Erstreckung radial über wenigstens eine radiale Abstützeinrichtung 25 stabilisiert sein. Damit kann die Einhaltung eines definierten radialen Abstands zwischen der Innenseite des äußeren Hohlwelle 15 und der Außenseite der inneren Hohlwelle 24 gewährleistet werden, und Relativbewegungen, welche im ungünstigsten Fall sogar zu einem Gegeneinanderschlagen oder unkontrollierten Verbiegen der Hohlwellen führen könnten, können vermieden werden. Hierzu sind bei der gezeigten Ausführung mehrere Stützstellen über die Längserstreckung mit jeweils einem in Fig. 4 näher gezeigten Stützring 25 als Abstützeinrichtung in dem äußeren, zweiten Fluidführungskanal 21 angeordnet. Die Stützringe 25 erstrecken sich zwischen der Innenseite des äußeren Hohlwelle 15 und der Außenseite der inneren Hohlwelle 24 und weisen Luftdurchtrittsöffnungen 29 auf. Die Luftdurchtrittsöffnungen 29 sind vorliegend als segmentartige Aussparungen am äußeren Radius ausgebildet, jedoch können diese auch lochartig oder in jeder anderen den Luftdurchtritt möglichst wenig behindernden Geometrie und Anzahl vorgesehen sein. Die Anzahl der Stützringe 25 und deren Abstand zueinander über die Längserstreckung der Hohlwellen 15, 24 kann in Abhängigkeit der Gestaltung des Triebwerkes und der Auslegung seiner Leistungsstärke variieren.

Über den Lufteinlass 27 dem ersten Fluidführungskanal 20 zugeführte Luft wird gemäß des Pfeils 30 in Hauptströmungsrichtung A zu einem stromabseitigen Endbereich 31 des ersten Fluidführungskanals 20 geführt, der in Fig. 3 vergrößert dargestellt ist. Über einen Umlenkbereich 32, der hier durch ein abgeschlossenes Ende 34 des zweiten Fluidführungskanals 21 gebildet ist, wird die Luft gemäß der Pfeile 36 in einen Endbereich 38 des zweiten Fluidführungskanals 21 umgelenkt, so dass die Luft in dem zweiten Fluidführungskanal 21 gemäß der Pfeile 39 entgegen der Hauptströmungsrichtung A und entgegen der Strömungsrichtung in dem ersten Fluidführungskanal 20 strömt bis sie in einem stromaufseitigen Endbereichs 40 des zweiten Fluidführungskanals 21 durch einen Fluidauslass 42 bzw. Luftauslass ausgeleitet wird.

Im Bereich des Fluidauslasses 42 ist eine einen Teil des Fluidführungskanals bildende Ablenkeinrichtung 44 angeordnet, mittels der die durch den zweiten Fluidführungskanal 21 geführte Luft gemäß der Pfeile 48 vorliegend in im Wesentlichen radialer Richtung R nach außen beispielsweise in Richtung des Bypasskanals 12 umgelenkt und diesem zugeführt wird. Hierdurch wird auf einfache Weise eine unerwünschte Wechselwirkung der durch den Fluidauslass 42 abgeführten Luft mit der durch den Fluideinlass 27 eingeleiteten Luft vermieden. In einem an den ersten Fluidführungskanal 20 grenzenden Bereich und in einem an den zweiten Fluidführungskanal 21 grenzenden Bereich ist hier jeweils eine Dichteinrichtung 46, 47 angeordnet.

Die Fluidführungskanäle 20, 21 sind vorliegend derart gestaltet, dass im Betrieb des Strahltriebwerks 1 insbesondere über den gesamten Betriebsbereich des Strahltriebwerks 1 in dem ersten Fluidführungskanal 20 und dem zweiten Fluidführungskanal 21 im Wesentlichen ein dem Umgebungsdruck entsprechender Druck vorliegt.

Bei der dargestellten und oben beschriebenen Ausführung werden durch die weitere Kühleinrichtung 18 insbesondere an die Niederdruckwelle 15 grenzende Triebwerkskomponenten im Betrieb des Strahltriebwerks 1 zusätzlich durch die Kühlung des Sekundärluftsystems gekühlt, so dass in deren Bereich im Betrieb des Strahltriebwerks 1 vorteilhaft niedrige Temperaturen vorliegen.

### Bezugszeichenliste

- 1: Strahltriebwerk
- 2: Hauptdrehachse
- 3: Lufteinlass
- 4: Bläser
- 5: Verdichter
- 6: Verbrennungseinrichtung
- 7: Hochdruckturbine
- 8: Niederdruckturbine
- 9: Ausströmdüse
- 10: Abgaskonus
- 11: Triebwerksgondel
- 12: Bypasskanal
- 14: Hochdruckwelle
- 15: Niederdruckwelle, äußere Hohlwelle
- 17: Kühleinrichtung, Sekundärluftsystem
- 18: weitere Kühleinrichtung
- 20: erster Fluidführungskanal
- 21: zweiter Fluidführungskanal
- 22: Nasenkonus
- 24: zentrale Welle, innere Hohlwelle
- 25: radiale Abstützeinrichtung, Stützring
- 26: stromaufseitiger Endbereich des ersten Fluidführungskanals
- 27: Fluideinlass
- 28: Pfeil Luftführung
- 29: Luftdurchtrittsöffnung
- 30: Pfeil Luftführung
- 31: stromabseitiger Endbereich des ersten Fluidführungskanals
- 32: Umlenkbereich
- 34: abgeschlossenes Ende des zweiten Fluidführungskanals
- 36: Pfeil Luftführung
- 38: stromabseitiger Endbereich des zweiten Fluidführungskanals
- 39: Pfeil Luftführung
- 40: stromaufseitiger Endbereich des zweiten Fluidführungskanals
- 42: Fluidauslass
- 44: Ablenkeinrichtung; Fluidführungskanal
- 46,47: Dichteinrichtung
- 48: Pfeil Luftführung
- A: axiale Richtung, Hauptströmungsrichtung
- R: radiale Richtung des Strahltriebwerks

## Patentansprüche

1. Strahltriebwerk (1) mit einer zur Kühlung von Triebwerkskomponenten vorgesehenen, durch ein Sekundärluftsystem gebildeten Kühleinrichtung (17) und wenigstens einer im Betrieb des Strahltriebwerks (1) um eine zentrale Triebwerksachse (2) rotierenden zentralen Welle (14, 15, 24), **dadurch gekennzeichnet, dass** wenigstens eine weitere Kühleinrichtung (18) vorgesehen ist, die
- einen ersten Fluidführungskanal (20), der zu der zentralen Triebwerksachse (2) koaxial verläuft und zur Führung von Kühlfluid in einer ersten axialen Richtung ausgebildet ist,
- einen zweiten Fluidführungskanal (21), der den ersten Fluidführungskanal (20) radial umgibt und zur Führung von Kühlfluid in einer der ersten axialen Richtung entgegengesetzten Richtung ausgebildet ist, und
- einen Umlenkbereich (32) zur Umlenkung des Kühlfluids von dem ersten Fluidführungskanal (20) in den zweiten Fluidführungskanal (21) oder von dem zweiten Fluidführungskanal (21) in den ersten Fluidführungskanal (20) in einem Endbereich (31, 38) des ersten Fluidführungskanals (20) und des zweiten Fluidführungskanals (21)
umfasst.

2. Strahltriebwerk nach Anspruch 1, **dadurch gekennzeichnet, dass** zwei zentrale Wellen (15, 24) vorgesehen sind, von denen eine als innere Hohlwelle (24) und die andere als koaxial zu der inneren Hohlwelle (24) angeordnete und diese umgebende äußere Hohlwelle (15) ausgebildet ist, wobei der erste Fluidführungskanal (20) innerhalb der inneren Hohlwelle (24) und der zweite Fluidführungskanal (21) zwischen der inneren Hohlwelle (24) und der äußeren Hohlwelle (15) verläuft.

3. Strahltriebwerk nach Anspruch 2, **dadurch gekennzeichnet, dass** die äußere Hohlwelle (15) im Umlenkbereich (32) ein abgeschlossenes Ende (34) aufweist.

4. Strahltriebwerk nach einem der Ansprüche 1 bis 3, **dadurch gekennzeichnet, dass** ein Fluideinlass (27) zur Zuführung von Kühlfluid in den ersten Fluidführungskanal (20) bzw. zweiten Fluidführungskanal (21) und ein Fluidauslass (42) zur Abführung von Kühlfluid aus dem zweiten Fluidführungskanal (21) bzw. ersten Fluidführungskanal (20) vorgesehen ist, wobei der Fluideinlass (27) und der Fluidauslass (42) in einem in Hauptströmungsrichtung (A) des Strahltriebwerks (1) stromaufgewandten oder stromabgewandten Endbereich (26, 40 bzw. 31, 38) der Fluidführungskanäle (20, 21) angeordnet sind.

5. Strahltriebwerk nach Anspruch 4, **dadurch gekennzeichnet, dass** der Fluideinlass (27) in einem in radialer Richtung (R) des Strahltriebwerks (1) mittigen Bereich des Strahltriebwerks (1) angeordnet ist.

6. Strahltriebwerk nach einem der Ansprüche 1 bis 5, **dadurch gekennzeichnet, dass** eine Kühlfluidfördereinrichtung im Bereich des Fluideinlasses (27) angeordnet ist.

7. Strahltriebwerk nach einem der Ansprüche 1 bis 6, **dadurch gekennzeichnet, dass** wenigstens ein Fluidführungskanal (20, 21) zumindest bereichsweise Mittel zur Strömungsführung innerhalb des Fluidführungskanals aufweist.

8. Strahltriebwerk nach einem der Ansprüche 1 bis 7, **dadurch gekennzeichnet, dass** sich der erste Fluidführungskanal (20) und/oder der zweite Fluidführungskanal (21) in axialer Richtung (A) des Strahltriebwerks (1) von einem Bereich stromauf eines Bläsers (4) bis zu einem Bereich stromab einer Turbineneinrichtung (7, 8) erstreckt.

9. Strahltriebwerk nach einem der Ansprüche 1 bis 8, **dadurch gekennzeichnet, dass** im Bereich des Fluidauslasses (42) wenigstens eine Ablenkeinrichtung (44) zur Führung des Kühlfluids in radialer Richtung (R) nach außen angeordnet ist.

10. Strahltriebwerk nach einem der Ansprüche 1 bis 9, **dadurch gekennzeichnet, dass** Kühlluft das Kühlfluid bildet.
